# EUROPÄISCHE PATENTSCHRIFT

(11) **EP 2 780 158 B1**
(45) Veröffentlichungstag und Bekanntmachung des Hinweises auf die Patenterteilung: **15.06.2016**
(21) Anmeldenummer: 12741345.8
(22) Anmeldetag: 01.08.2012
(51) Int. Cl.: B30B 9/26, B01D 29/25, C02F 11/12, B01D 29/35, B01D 29/64

(54) **SCHNECKENPRESSE**
SCREW PRESS II
PRESSE À VIS II

(30) Priorität: 18.11.2011 DE 102011086615; 18.11.2011 DE 102011086619
(43) Veröffentlichungstag der Anmeldung: 24.09.2014
(73) Patentinhaber: Voith Patent GmbH, 89522 Heidenheim (DE)
(72) Erfinder: HEIM, Martin, 88212 Ravensburg (DE); BREY, Andreas, 88212 Ravensburg (DE); BADER, Johannes, 88260 Argenbühl (DE); NUSSBAUMER, Markus, 88339 Bad Waldsee (DE)
(86) Internationale Anmeldenummer: PCT/EP2012/065005
(87) Internationale Veröffentlichungsnummer: WO 2013/072081

(56) Entgegenhaltungen:
- EP-A1- 1 873 123
- KR-A- 20110 001 634
- US-A- 1 094 892
- US-A- 2 004 408
- US-A- 2 910 183

## Beschreibung

Die Erfindung betrifft eine Schneckenpresse zum Abtrennen von Flüssigkeiten aus einer Suspension, insbesondere einer Schlamm- oder Faserstoffsuspension mit wenigstens einer, in einem zylindrischen Mantel rotierenden Schneckenwelle, wobei die Suspension durch einen zwischen dem Mantel und der Schneckenwelle gebildeten Ringspalt von wenigstens einer Einlass-zu einer Austassöffnung gepresst wird und der Mantel zumindest aus einem radial innenliegenden Sieb und einem radial außenliegenden Stützkörper besteht.

Derartige Entwässerungsvorrichtungen sind seit langer Zeit bekannt und werden mit Erfolg insbesondere als Faserpresse bei der Eindickung von Faserstoffsuspensionen oder als Schlammpresse zur Eindickung von Rejekten in Maschinen zur Herstellung einer Faserstoffbahn verwendet.

Dabei ist in der Regel eine angetriebene, zylindrische oder konische Förderschnecke innerhalb eines im Wesentlichen konzentrisch zylindrischen oder konischen, gelochten Blechmantels oder dergl. angeordnet. Die radial zugegebene Suspension wird im Zusammenwirken mit einer Staueinrichtung entwässert, wobei das Wasser durch den gelochten Blechmantel oder dergl. entweichen kann, während der Faserstoff bzw. die Rejecte zurückgehalten werden.
Die Verdichtung und Entwässerung des Faserstoffs bzw. Rejects wird dabei verbessert, wenn sich die Ringspalt-Querschnittsfläche zwischen Blechmantel und Förderschnecke vom Einlauf zum Auslauf hin verkleinert.
Werden die bekannten Entwässerungsschnecken wie beschrieben ausgeführt, sind sie infolge der intensiven Reibung zwischen Faserstoff bzw. Reject und den Bauteilen der Maschine einem besonders großen Verschleiß ausgesetzt. Es findet nämlich eine beträchtliche Relativbewegung bei gleichzeitig enormen Axial- und Radialkräften zwischen dem bereits stark eingedickten Stoff und den Bauteilen statt. Zudem enthält der eingedickte Stoff- neben Fasern-oft viele kleine Metallteile, Sand und andere abrasive Stoffe sowie harte Plastikstücke, die erfahrungsgemäß zu einem hohen Verschleiß auch hochwertiger metallischer Bauteile führen, können.
Wegen der großen Kräfte sind die Bauteile außerdem entsprechend dimensioniert, was sie schwer und teuer macht.

US 2 910 183 A1 beschreibt eine Schneckenpresse gemäss dem Oberbegriff des Anspruchs 1.

Die Aufgabe der Erfindung ist es daher eine hohe Stabilität verbunden mit einem möglichst geringem Gewicht des Stützkörpers ohne Beeinträchtigung der Funktion zu erreichen.

Erfindungsgemäß wurde die Aufgabe durch eine Schneckenpresse mit den Merkmalen des Anspruchs 1 gelöst.

Der Stützkörper ist hierbei unter Gewährleistung einer hohen Stabilität relativ einfach im Aufbau und der Herstellung. Hinzu kommt, dass zumindest die Stützstäbe das Sieb über die Kontaktabschnitte sicher abstützen. Dabei gewährleisten die Aussparungen und/oder Durchbrüche in denselben, dass durch das Sieb nach außen gepresste Flüssigkeit an der Außenoberfläche des Siebes entlang nach unten fließen und dort in einem Entwässerungskasten aufgefangen, gesammelt und abgeführt werden kann.
Daher sind diese Aussparungen und/oder Durchbrüche insbesondere bei den im oberen Teil des Siebes angeordneten Stützstäben wichtig.
Falls Durchbrüche in den Stützstäben angeordnet werden, so sollten diese zur Ermöglichung eines weitestgehend ungehinderten Abfließens möglichst nahe am Sieb vorgesehen werden.

Aus gleichem Grund sollten die Aussparungen zum Sieb hin offen sein.

Im Interesse geringer Kosten und einer hohen Stabilität sollten die Stützstäbe einen viereckigen, insbesondere rechteckigen und vorzugsweise radial ausgerichteten Querschnitt aufweisen.
Eine hohe Formstabilität ergibt sich bei rechteckigem Querschnitt dann, wenn eine schmale Seite des Querschnitts der Stützstäbe mit dem Sieb in Kontakt steht.

Um den Herstellungsaufwand weiter zu minimieren, sollten die Stützringe vorzugsweise als Ringscheibe ausgebildet sein, welche Aussparungen für die Stützstäbe besitzt.

Die Montage vereinfacht sich, wenn die Stützringe jeweils von mit Vorteil zwei bis vier, insbesondere gleichgroßen Ringsegmenten gebildet werden.

Zur Gewährleistung einer hohen Stabilität des Stützkörpers sowie eines einfachen Aufbaus sollte die Verbindung zwischen den Ringsegmenten der jeweiligen Stützringe ausschließlich über in Umfangsrichtung des Stützkörpers verlaufende Verbindungselemente erfolgen.

Durch den Wegfall von meist in Umfangsrichtung oder axial verlaufenden Verbindungsflanschen zwischen den Modulen des Stützkörpers vermindert sich das Gewicht des Stützkörpers erheblich.
Die Verbindung der Ringsegmente eines Stützringes erfolgt mit Vorteil einfach über vorzugsweise lösbar mit den Ringsegmenten verbundene Zugelemente. Diese Zugelemente können insbesondere als Flachstahl ausgeführt und ein - oder beidseitig der Ringsegmente mit diesen verschraubt sein.

In Abhängigkeit vom Durchmesser des Siebes sowie der Druckverhältnisse im Ringspalt sollten im Interesse einer möglichst umfassenden Abstützung des Siebes durch den Stützkörper vorzugsweise 4 bis 32, insbesondere zwischen 8 und 28 Stützstäbe möglichst gleichmäßig über den Umfang der Stützringe verteilt angeordnet werden.

Außerdem ist es für Herstellung und Montage von Vorteil, wenn das Sieb mehrteilig ausgeführt ist und vorzugsweise von zwei Halbschalen gebildet wird.

Wegen des hohen Verschleißes müssen das Sieb oder Teile davon relativ häufig ausgetauscht werden. Um dies zu vereinfachen, sollten die Trennlinien zwischen den Ringsegmenten aller Stützringe in Umfangsrichtung an den gleichen Stellen liegen und/oder die Trennlinie zwischen den Ringsegmenten mit der Trennlinie der Siebteile übereinstimmen. Aus gleichem Grund ist es von Vorteil, wenn das Sieb lösbar mit den Stützstäben verbunden ist.

Hierzu sollten die Siebteile an den in Umfangsrichtung liegenden Enden nach außen abgewinkelt und diese abgewinkelten Enden an den Stützstäben befestigt, vorzugsweise mit diesen verschraubt sein.

Da die Siebteile nicht angeschweißt werden, ist nicht nur ein Wechsel einfacher, es kommt auch nicht mehr zum thermischen Verzug der Siebteile während der Montage.

Außerdem liegen die Schrauben zur Befestigung der Siebteile an den Stützstäben nicht innerhalb des zylindrischen Siebes. Auf diese Weise verschleißen sie nicht und können bei einem Wechsel leicht gelöst werden.

Zur Verringerung des Herstellungs- und Montageaufwandes sollte der Mantel aus mehreren axial nebeneinander angeordneten und miteinander verbundenen Segmenten bestehen.

Nachfolgend soll die Erfindung an einem Ausführungsbeispiel näher erläutert werden. In der beigefügten Zeichnung zeigt:
Figur 1: einen schematischen Querschnitt durch eine Schneckenpresse;
Figur 2: eine Draufsicht auf den Mantel 1 sowie eine Teilansicht des Mantels 1;
Figur 3: eine andere Teilansicht des Mantels 1;
Figur 4 und 5: eine Detailansicht der Siebbefestigung.

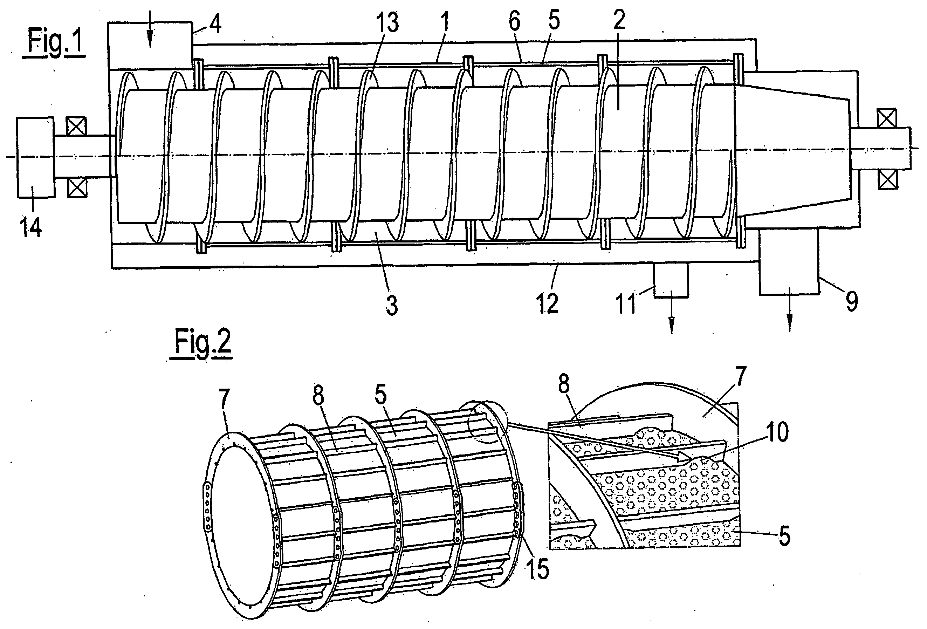

Die in Figur 1 gezeigte Schneckenpresse dient zur Entwässerung einer häufig zumindest teilweise von Altpapier gebildeten Faserstoffsuspension, wie sie zur Herstellung einer Faserstoffbahn benötigt wird.
Allerdings ist auch die Entwässerung einer Faserstoffsuspension aus Frischfasern problemlos möglich.
Hierzu besitzt die Schneckenpresse eine, in einem beispielhaft zylindrischen Mantel 1 konzentrisch angeordnete und rotierbar gelagerte Schneckenwelle 2, wobei die Suspension von den Wendeln 13 der Schneckenwelle 2 durch einen zwischen dem Mantel 1 und der Schneckenwelle 2 gebildeten Ringspalt 3 von wenigstens einer Einlass 4- zu einer Auslassöffnung 9 gepresst wird.

Die Suspension wird beim Durchlaufen des Ringspaltes 3 sowohl durch die Schwerkraft als auch durch eine beim Transport stattfindende Komprimierung entwässert. Dabei läuft das Wasser durch die Sieböffnungen des Mantels 1 in einen Entwässerungskasten mit einem Ablauf 11. Dieser Entwässerungskasten sammelt das aufgefangene Filtrat und wird hier beispielhaft in das den Mantel 1 umgebende Gehäuse 12 integriert.
Um die Entwässerung zu intensivieren, ist die Schneckenwelle 2 derart konisch ausgebildet und angeordnet, dass sich der Ringspalt 3 in Transportrichtung allmählich verkleinert.
Nach dem Durchlaufen des Ringspalts 3 gelangt die eingedickte Suspension in den Bereich der Auslassöffnung 9.

Die Schneckenwelle 2 wird von einem Motor 14 angetrieben, wobei ein Getriebe, ein Riemen o.ä. dazwischen geschaltet sein kann.

Da der perforierte Mantel 1 im Ringspalt 3 erheblichen radialen und axialen Kräften ausgesetzt ist, wird er von einem radial innenliegenden Sieb 5 und einem, dieses radial abstützenden und radial außenliegenden Stützkörper 6 gebildet.

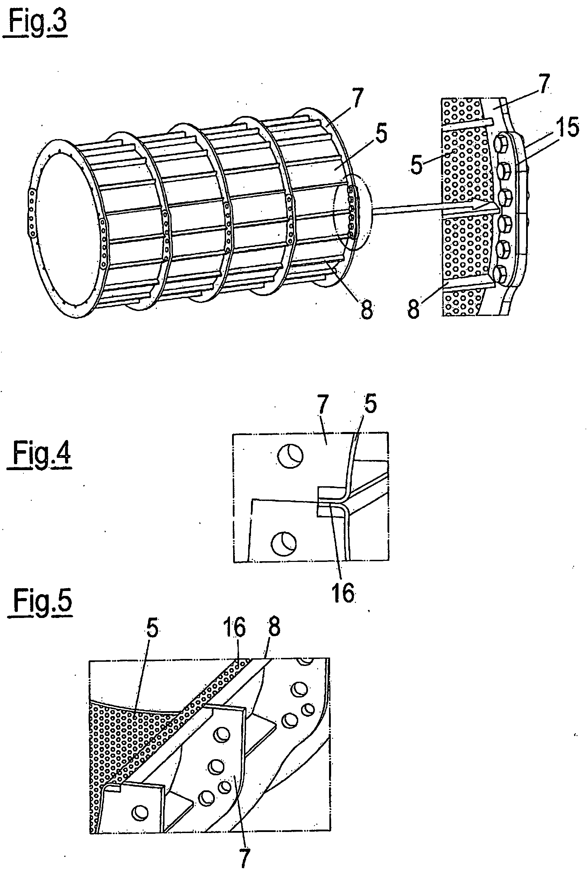

Im Interesse einer einfachen, aber effektiven Konstruktion besteht der Stützkörper 6 aus mehreren, senkrecht zur Zylinderachse des Stützkörpers 6 verlaufenden, axial voneinander beabstandeten Stützringen 7, die über mehrere, über den Umfang der Stützringe 7 verteilt angeordnete und axial verlaufende Stützstäbe 8 miteinander verbunden sind.
Gemäß der in Figur 2 und 3 dargestellten Ausführung haben die Stützstäbe 8 einen rechteckigen Querschnitt, wobei die langen Seiten radial bezüglich der Zylinderachse verlaufen.

Dies gewährleistet eine vollumfängliche, stabile Abstützung des Siebes 5, wie es insbesondere bei großem Siebdurchmesser und/oder hohen Drücken im Ringspalt 3 erforderlich ist.

Zur Minimierung der Herstellungskosten sind die Stützringe 7 als Ringscheibe ausgebildet und werden von zwei gleichgroßen Ringsegmenten gebildet, die ausschließlich über mehrere Verbindungselemente 15 in Form von Zugelementen lösbar miteinander verbunden sind.
Als Verbindungselemente 15 eignen sich insbesondere Flachstahl-Profile, die in Umfangsrichtung des Stützkörpers 6 verlaufen und beidseitig der zu verbindenden Ringsegmente mit diesen verschraubt werden.
Da hierbei auf insbesondere in axialer Richtung verlaufende Verbindungsflansche zwischen den Ringsegmenten verzichtet wird, kann das Gewicht des Stützkörpers 6 wesentlich reduziert werden, ohne dass dies die Stabilität desselben beeinträchtigt.

Zur Fixierung der Stützstäbe 8 weisen die Stützringe 7 entsprechende Aussparungen auf, in die die Stützstäbe 8 eingeführt werden. Dabei ist, wie insbesondere in Figur 2 zu erkennen, wesentlich, dass zumindest die Stützstäbe 8 abschnittsweise mit dem Sieb 5 in Kontakt stehen.
Um das Abfließen der aus dem Sieb 5 nach außen gepressten Flüssigkeit zu erleichtern, weisen die Stützstäbe 8 zwischen den Abschnitten, in denen die Stützstäbe 8 mit dem Sieb 5 in Kontakt stehen, mehrere, über ihre Länge verteilt angeordnete und zum Sieb 5 hin offene Aussparungen 10 auf. Die ausgepresste Flüssigkeit kann so weitestgehend ungehindert über den Außeriumfang des Siebes 5 nach unten in den Entwässerungskasten des Gehäuses 12 fließen.
Dabei beeinträchtigen die Aussparungen 10 die Stützfunktion der Stützstäbe 8 gegenüber dem Sieb 5 kaum.

Im Interesse eines minimalen Herstellungs- und Montagaufwandes besteht der Mantel 1 aus mehreren axial nebeneinander angeordneten und miteinander verbundenen Segmenten. Hierbei erfolgt die Verbindung der Segmente über eine Verbindung der entsprechenden Stützkörper 6.
Da insbesondere das Sieb 5 einem hohen Verschleiß ausgesetzt ist, ist dieses zur Ermöglichung eines einfachen und separaten Austausches mehrteilig ausgeführt. Gemäß Figur 2 und 3 wird das Sieb 5 von zwei Halbschalen gebildet, deren Trennlinie parallel zur Zylinderachse verläuft.
Aus gleichem Grund liegt die Trennlinien zwischen den Ringsegmenten aller Stützringe 7 in Umfangsrichtung an den gleichen Stellen, wobei die Trennlinie zwischen den Ringsegmenten mit der Trennlinie der Siebteile übereinstimmt.

Dabei ist es völlig ausreichend, wenn das Sieb 5 lösbar mit den Stützstäben 8 verbunden ist. Dies erleichtert den Wechsel erheblich.
Damit die Befestigungsschrauben nicht verschleißen und leicht gelöst werden können, sind die Halbschalen des Siebes 5 an den in Umfangsrichtung liegenden Enden nach außen abgewinkelt. Diese abgewinkelten Enden 16 wiederum sind gemäß den Figuren 4 und 5 mit den Stützstäben 8 verschraubt. Der sich dabei zwischen den Halbschalen bildende Spalt kann zusätzlich zur Entwässerung genutzt werden.
Wesentlich ist, dass innerhalb des Siebes 5 keine Schrauben angeordnet sind, da dieser Bereich einem hohen Verschleiß ausgesetzt ist.

Im Gegensatz zu Figur 1 kann die Schneckenpresse auch schräg oder senkrecht angeordnet sein.

## Patentansprüche

1. Schneckenpresse zum Abtrennen von Flüssigkeiten aus einer Suspension, insbesondere einer Schlamm oder Faserstoffsuspension mit wenigstens einer, in einem zylindrischen Mantel (1) rotierenden Schneckenwelle (2), wobei die Suspension durch einen zwischen dem Mantel (1) und der Schneckenwelle (2) gebildeten Ringspalt (3) von wenigstens einer Einlass-(4) zu einer Auslassöffnung (9) gepresst wird, der Mantel (1) zumindest aus einem radial innenliegenden Sieb (5) und einem radial außenliegenden Stützkörper (6) besteht, der Stützkörper (6) zumindest von mehreren, axial voneinander beabstandeten, senkrecht zur Achse ausgerichteten Stützringen (7) gebildet wird, die Stützringe (7) über mehrere, über den Umfang der Stützringe (7) verteilt angeordnete und axial verlaufende Stützstäbe (8) miteinander verbunden sind und zumindest die Stützstäbe (8) wenigstens abschnittsweise mit dem Sieb (5) in Kontakt stehen, **dadurch gekennzeichnet, dass** die Stützringe (7) Aussparungen für die Stützstäbe (8) besitzen und ein oder mehrere Stützstäbe (8) zwischen diesen Kontaktabschnitten (mit dem Sieb 5) zum Sieb (5) hin offene Aussparungen (10) aufweisen.

2. Schneckenpresse nach Anspruch 1, **dadurch gekennzeichnet, dass** die Stützstäbe (8) einen viereckigen Querschnitt aufweisen.

3. Schneckenpresse nach Anspruch 2, **dadurch gekennzeichnet, dass** die Stützstäbe (8) einen rechteckigen Querschnitt haben und vorzugsweise eine schmale Seite des Querschnitts der Stützstäbe (8) mit dem Sieb (5) in Kontakt steht.

4. Schneckenpresse nach einem der vorhergehenden Ansprüche, **dadurch gekennzeichnet, dass** die Stützringe (7) jeweils von vorzugsweise zwei bis vier, insbesondere gleichgroßen Ringsegmenten gebildet werden.

5. Schneckenpresse nach Anspruch 4, **dadurch gekennzeichnet, dass** die Verbindung zwischen den Ringsegmenten der jeweiligen Stützringe (7) ausschließlich über in Umfangsrichtung des Stützkörpers (6) verlaufende Verbindungselemente (15) erfolgt.

6. Schneckenpresse nach Anspruch 5, **dadurch gekennzeichnet, dass** die Verbindungselemente (15) als vorzugsweise lösbar mit den Ringsegmenten verbundene Zugelemente ausgeführt sind.

7. Schneckenpresse nach einem der Ansprüche 4 bis 6, **dadurch gekennzeichnet, dass** die Trennlinie zwischen den Ringsegmenten aller Stützringe (7) in Umfangsrichtung an den gleichen Stellen liegen.

8. Schneckenpresse nach einem der vorhergehenden Ansprüche, **dadurch gekennzeichnet, dass** 4 bis 32, vorzugsweise zwischen 8 und 28 Stützstäbe (8) möglichst gleichmäßig über den Umfang der Stützringe (7) verteilt angeordnet sind.

9. Schneckenpresse nach einem der vorhergehenden Ansprüche, **dadurch gekennzeichnet, dass** das Sieb (5) mehrteilig ausgeführt ist und vorzugsweise von zwei Halbschalen gebildet wird.

10. Schneckenpresse nach einem der Ansprüche 7 bis 9, **dadurch gekennzeichnet, dass** die Trennlinie zwischen den Ringsegmenten mit der Trennlinie der Siebteile übereinstimmt.

11. Schneckenpresse nach einem der vorhergehenden Ansprüche, **dadurch gekennzeichnet, dass** das Sieb (5) lösbar mit den Stützstäben (8) verbunden ist.

12. Schneckenpresse nach einem der Ansprüche 9 bis 11, **dadurch gekennzeichnet, dass** die Siebteile an den in Umfangsrichtung liegenden Enden nach außen abgewinkelt und diese abgewinkelten Enden (16) an den Stützstäben (8) befestigt, vorzugsweise mit diesen verschraubt sind.

13. Schneckenpresse nach einem der vorhergehenden Ansprüche, **dadurch gekennzeichnet, dass** der Mantel (1) aus mehreren axial nebeneinander angeordneten und miteinander verbundenen Segmenten besteht.

## Claims

1. Screw press for separating liquids from a suspension, in particular a sludge or fibrous suspension, having at least one screw shaft (2) rotating in a cylindrical shell (1), the suspension being pressed through an annular gap (3) formed between the shell (1) and the screw shaft (2) from at least one inlet opening (4) to an outlet opening (9), the shell (1) comprising a radially inner screen (5) and a radially outer supporting element (6), the supporting element (6) being formed at least by a plurality of supporting rings (7) spaced apart axially from one another and oriented at right angles to the axis, the supporting rings (7) being connected to one another by a plurality of supporting rods (8) arranged distributed over the circumference of the supporting rings (7) and extending axially, and at least the supporting rods (8) being in contact with the screen (5), at least in some sections,
**characterized in that**
the supporting rings (7) have cut-outs for the supporting rods (8), and one or more supporting rods (8) between these contact sections (with the screen 5) have cut-outs (10) open towards the screen (5).

2. Screw press according to claim 1,
**characterized in that**
the supporting rods (8) have a four-cornered cross section.

3. Screw press according to Claim 2,
**characterized in that**
the supporting rods (8) have a rectangular cross section and, preferably, a narrow side of the cross section of the supporting rods (8) is in contact with the screen (5).

4. Screw press according to one of the preceding claims,
**characterized in that**
the supporting rings (7) are each formed by preferably two to four in particular equally large ring segments.

5. Screw press according to Claim 4,
**characterized in that**
the connection between the ring segments of the respective supporting rings (7) is made exclusively via connecting elements (15) extending in the circumferential direction of the supporting element (6).

6. Screw press according to Claim 5,
**characterized in that**
the connecting elements (15) are implemented as tensile elements preferably connected detachably to the ring segments.

7. Screw press according to one of Claims 4 to 6,
**characterized in that**
the dividing line between the ring segments of all the supporting rings (7) is located at the same points in the circumferential direction.

8. Screw press according to one of the preceding claims,
**characterized in that** 4 to 32, preferably between 8 and 28, supporting rods (8) are arranged distributed as uniformly as possible over the circumference of the supporting rings (7).

9. Screw press according to one of the preceding claims,
**characterized in that**
the screen (5) is designed in multiple parts and is preferably formed by two half shells.

10. Screw press according to one of Claims 7 to 9,
**characterized in that**
the dividing line between the ring segments coincides with the dividing line of the screen parts.

11. Screw press according to one of the preceding claims,
**characterized in that**
the screen (5) is connected detachably to the supporting rods (8).

12. Screw press according to one of Claims 9 to 11,
**characterized in that**
the screen parts are angled over outwards at the ends located in the circumferential direction, and these angled-over ends (16) are fixed to the supporting rods (8), preferably screwed to the latter.

13. Screw press according to one of the preceding claims,
**characterized in that**
the shell (1) comprises a plurality of segments arranged axially beside one another and connected to one another.

## Revendications

1. Presse à vis pour séparer des liquides d'une suspension, en particulier d'une boue ou d'une suspension fibreuse comprenant au moins un arbre à vis sans fin (2) tournant dans une enveloppe cylindrique (1), la suspension étant pressée à travers une fente annulaire (3) formée entre l'enveloppe (1) et l'arbre à vis sans fin (2) depuis au moins une ouverture d'entrée (4) jusqu'à une ouverture de sortie (9), l'enveloppe (1) se composant au moins d'un tamis (5) situé radialement à l'intérieur et d'un corps de support (6) situé radialement à l'extérieur, le corps de support (6) étant formé par au moins plusieurs bagues de support (7) espacées axialement les unes des autres et orientées perpendiculairement à l'axe, les bagues de support (7) étant connectées les unes aux autres par le biais de plusieurs barres de support (8) réparties sur la périphérie des bagues de support (7) et s'étendant axialement et au moins les barres de support (8) étant en contact au moins en partie avec le tamis (5), **caractérisée en ce que** les bagues de support (7) possèdent des évidements pour les barres de support (8) et une ou plusieurs barres de support (8) présentant entre leurs portions de contact (avec le tamis 5) des évidements (10) ouverts vers le tamis (5).

2. Presse à vis selon la revendication 1, **caractérisée en ce que** les barres de support (8) présentent une section transversale quadrilatérale.

3. Presse à vis selon la revendication 2, **caractérisée en ce que** les barres de support (8) présentent une section transversale rectangulaire et de préférence un côté étroit de la section transversale des barres de support (8) est en contact avec le tamis (5).

4. Presse à vis selon l'une quelconque des revendications précédentes, **caractérisée en ce que** les bagues de support (7) sont à chaque fois formées par de préférence deux à quatre segments de bague, notamment de même grandeur.

5. Presse à vis selon la revendication 4, **caractérisée en ce que** la connexion entre les segments de bague des bagues de support respectives (7) s'effectue exclusivement par le biais d'éléments de connexion (15) s'étendant dans la direction périphérique du corps de support (6).

6. Presse à vis selon la revendication 5, **caractérisée en ce que** les éléments de connexion (15) sont réalisés sous forme d'éléments de traction connectés de préférence de manière amovible aux segments de bague.

7. Presse à vis selon l'une quelconque des revendications 4 à 6, **caractérisée en ce que** la ligne de séparation entre les segments de bague de toutes les bagues de support (7) est située aux mêmes endroits dans la direction périphérique.

8. Presse à vis selon l'une quelconque des revendications précédentes, **caractérisée en ce que** de 4 à 32, de préférence entre 8 et 28 barres de support (8) sont disposées de manière répartie aussi uniformément que possible sur la périphérie des bagues de support (7).

9. Presse à vis selon l'une quelconque des revendications précédentes, **caractérisée en ce que** le tamis (5) est réalisé en plusieurs parties et est formé de préférence de deux demi-coques.

10. Presse à vis selon l'une quelconque des revendications 7 à 9, **caractérisée en ce que** la ligne de séparation entre les segments de bague coïncide avec la ligne de séparation des parties de tamis.

11. Presse à vis selon l'une quelconque des revendications précédentes, **caractérisée en ce que** le tamis (5) est connecté de manière amovible aux barres de support (8).

12. Presse à vis selon l'une quelconque des revendications 9 à 11, **caractérisée en ce que** les parties de tamis sont coudées vers l'extérieur au niveau des extrémités situées dans la direction périphérique et ces extrémités coudées (16) sont fixées aux barres de support (8), de préférence par vissage.

13. Presse à vis selon l'une quelconque des revendications précédentes, **caractérisée en ce que** l'enveloppe (1) se compose de plusieurs segments disposés axialement les uns à côté des autres et connectés les uns aux autres.
